# FASCICULE DE BREVET EUROPEEN

(11) **EP 0 793 908 B1**
(45) Date de publication et mention de la délivrance du brevet: **30.05.2001**
(21) Numéro de dépôt: 97440022.8
(22) Date de dépôt: 06.03.1997
(51) Int. Cl.: A01D 34/66

(54) **Machine de coupe**
Mähmaschine
Cutting machine

(30) Priorité: 08.03.1996 FR 9603122
(43) Date de publication de la demande: 10.09.1997
(73) Titulaire: KUHN S.A., 67700 Saverne (FR)
(72) Inventeur: Wattron, Bernard, 67700 Haegen (FR); Walch, Martin, 67490 Dettwiller (FR)

(56) Documents cités:
- EP-A- 0 073 359
- EP-A- 0 184 155
- EP-A- 0 211 785
- EP-A- 0 262 743
- EP-A- 0 349 015
- EP-A- 0 361 573
- EP-A- 0 486 414
- EP-A- 0 514 314
- EP-A- 0 679 327
- FR-A- 2 296 996
- Technical catalogue "VICON-faucheuse-conditionneuse olympus KM165"

## Description

La présente invention concerne une machine de coupe comportant :
- un châssis muni de deux points d'attelage inférieurs et d'un point d'attelage supérieur destinés à être liés à un véhicule moteur, ledit châssis présentant un plan vertical médian dirigé suivant la direction d'avance et s'étendant à mi-distance entre les deux points d'attelage inférieurs ;
- un mécanisme de coupe comportant au moins un élément de coupe et s'étendant lors du travail transversalement à la direction d'avance (position de travail) et, lors du transport, au moins sensiblement suivant la direction d'avance (position de transport) ;
- un bras de suspension lié au châssis au moyen d'une première articulation cylindrique d'axe longitudinal au moins sensiblement vertical et au mécanisme de coupe au moyen d'une deuxième articulation cylindrique d'axe longitudinal au moins sensiblement horizontal et au moins sensiblement parallèle à la direction d'avance lorsque ledit mécanisme de coupe est dans la position de travail ;
- un dispositif de transmission primaire lié au châssis et muni d'un arbre d'entrée primaire et d'un arbre de sortie primaire ;
- un dispositif de transmission secondaire lié directement ou indirectement au mécanisme de coupe et destiné à animer 1' (les) élément(s) de coupe ;
- un arbre de transmission télescopique implanté entre l'arbre de sortie primaire et un arbre d'entrée secondaire du dispositif de transmission secondaire et comportant un premier joint universel situé du côté dudit arbre de sortie primaire et un deuxième joint universel situé du côté dudit arbre d'entrée secondaire.

Une telle machine de coupe est connue par le document technique "VICON - faucheuse-conditionneuse olympus KM 165".

Cette machine de coupe comporte dans les grandes lignes un châssis muni de deux points d'attelage inférieurs et un point d'attelage supérieur, un dispositif de transmission primaire lié audit châssis, un dispositif de transmission secondaire lié à un mécanisme de coupe et un bras de suspension lié audit châssis au moyen d'une première articulation cylindrique et audit mécanisme de coupe au moyen d'une deuxième articulation cylindrique.

Le dispositif de transmission primaire comporte d'une part un arbre d'entrée primaire situé, selon une vue de dessus, dans un plan vertical implanté entre le point d'attelage inférieur le plus éloigné du mécanisme de coupe et le point d'attelage supérieur et d'autre part un arbre de sortie primaire.

Le dispositif de transmission secondaire est destiné à animer des éléments de coupe du mécanisme de coupe et comporte un arbre d'entrée secondaire.

Entre l'arbre de sortie primaire et l'arbre d'entrée secondaire est prévu un arbre de transmission télescopique comportant d'une part un premier joint universel situé du côté dudit arbre de sortie primaire et dans un plan vertical médian s'étendant à mi-distance entre les deux points d'attelage inférieurs et d'autre part un deuxième joint universel situé du côté dudit arbre d'entrée secondaire.

En position de travail le mécanisme de coupe s'étend transversalement à la direction d'avance et en position de transport le mécanisme de coupe a été pivoté manuellement vers l'arrière autour de la première articulation cylindrique de manière qu'il s'étende parallèlement à la direction d'avance.

Cette machine de coupe connue présente cependant un inconvénient majeur.

En effet, la course de l'arbre de transmission télescopique ne permet pas de pivoter le mécanisme de coupe dans la position de transport sans ôter ledit arbre de transmission télescopique.

Une telle opération demande du temps à l'opérateur et n'est pas très confortable à effectuer.

A cet effet, le document publicitaire "TAARUP - faucheuses-conditionneuses 325-326" distribué début 1995, montre une solution pour résoudre ce problème. Cette solution consiste à pivoter, en même temps que le mécanisme de coupe, le dispositif de transmission primaire autour d'un axe de pivotement parallèle à l'axe longitudinal de la première articulation cylindrique de manière à augmenter la distance relative entre l'arbre de sortie primaire et l'arbre d'entrée secondaire. Une telle conception permet de pivoter le mécanisme de coupe vers l'arrière dans sa position de transport sans ôter l'arbre de transmission télescopique.

Cependant, cette solution présente également des inconvénients.

En effet, pour pivoter le dispositif de transmission primaire en même temps que le mécanisme de coupe, il est prévu un mécanisme de commande faisant appel à un certain nombre d'articulations et de bielles. Une telle conception est complexe et très onéreuse à réaliser.

A cet effet, une autre solution est décrite par le document EP-A-0 514 314.

Ce document décrit une machine de coupe à disques comprenant également un châssis, un dispositif de transmission primaire muni d'un arbre d'entrée primaire et d'un arbre de sortie primaire, un mécanisme de coupe, un bras de suspension lié au châssis au moyen d'une première articulation cylindrique et au mécanisme de coupe au moyen d'une deuxième articulation cylindrique, un dispositif de transmission secondaire muni d'un arbre d'entrée secondaire, et un arbre de transmission télescopique implanté entre l'arbre de sortie primaire et l'arbre d'entrée secondaire. Cet arbre de transmission télescopique comporte un premier joint universel situé du côté dudit arbre de sortie primaire et un deuxième joint universel situé du côté dudit arbre d'entrée secondaire. Le premier joint universel est situé, selon une vue de dessus, entre un plan vertical médian d'un tracteur auquel est liée la faucheuse à disques et la première articulation cylindrique de manière que, dans la position de transport, l'arbre de transmission télescopique s'étend dans un plan vertical parallèle au plan vertical médian du tracteur. Plus précisément le premier joint universel est situé dans le voisinage de la première articulation cylindrique permettant notamment de pivoter le mécanisme de coupe vers l'arrière dans sa position de transport sans ôter ledit arbre de transmission télescopique.

Cette machine de coupe est en outre dotée d'un moyen assurant le pivotement du mécanisme de coupe autour de la deuxième articulation cylindrique, de manière que dans la position de transport l'extrémité du mécanisme de coupe située le plus près du tracteur est déplacée vers le haut sous le bras de suspension et que dans cette position, l'arbre de transmission télescopique a une longueur minimale.

On remarquera que, en position de travail, l'arbre de sortie primaire et l'arbre d'entrée secondaire sont situés relativement proches l'un de l'autre ce qui se traduit par un arbre de transmission télescopique relativement court.

Cependant cette faucheuse présente également des inconvénients. En effet, en position de transport, lorsque le mécanisme de coupe est pivoté vers l'arrière autour de la première articulation cylindrique, il s'étend, compte tenu de l'implantation de la première articulation cylindrique, loin derrière le châssis ce qui augmente le porte-à-faux de la machine de coupe lors du transport.

Un autre inconvénient de cette machine de coupe réside dans le fait que l'adaptation au sol du mécanisme de coupe est assez limitée. En effet, lors du travail, le pivotement du mécanisme de coupe autour de la deuxième articulation cylindrique est assez restreint, dû à la faible longueur de l'arbre de transmission télescopique et aux joints universels qui présentent des angles d'entraînement limités.

Un autre inconvénient de cette faucheuse est qu'elle fait en sus appel à un moyen assurant le pivotement du mécanisme de coupe autour de la deuxième articulation cylindrique ce qui se traduit par des coûts supplémentaires.

Le but de la présente invention est de remédier aux inconvénients des machines de coupe de l'art antérieur.

A cet effet, la machine de coupe selon l'invention est caractérisée en ce que le premier joint universel est situé du côté du plan vertical médian opposé à celui où s'étend le mécanisme de coupe en position de travail.

Une telle conception de la machine de coupe permet de pivoter le mécanisme de coupe dans la position de transport sans ôter ledit arbre de transmission télescopique et elle permet également un grand débattement dudit mécanisme de coupe autour de la deuxième articulation cylindrique pour une meilleure adaptation au sol de ce dernier, tout en ayant une machine de coupe simple et peu chère.

L'invention concerne également les caractéristiques suivantes considérées isolément ou dans toutes leurs combinaisons techniquement possibles :
- le premier joint universel est situé sensiblement dans un plan vertical dirigé suivant la direction d'avance et contenant le point d'attelage inférieur éloigné du mécanisme de coupe ce qui permet avantageusement d'obtenir un arbre de transmission télescopique d'une grande longueur et donc une meilleure adaptation au sol dudit mécanisme de coupe ;
- le premier joint universel est situé plus haut que l'arbre d'entrée primaire afin d'éviter, lors du travail, que celui-ci et l'arbre de transmission télescopique ne viennent en contact avec le produit coupé ou le produit à couper, de plus une telle implantation du premier joint universel permet d'augmenter encore davantage la longueur dudit arbre de transmission télescopique ;
- l'arbre d'entrée primaire est situé sensiblement dans le plan vertical médian afin de faciliter l'entraînement de la machine de coupe au moyen du véhicule moteur ;
- l'arbre d'entrée primaire est situé sensiblement dans un plan horizontal contenant les deux points d'attelage inférieurs ;
- l'arbre d'entrée primaire s'étend sensiblement suivant la direction d'avance ;
- l'arbre de sortie primaire s'étend transversalement, de préférence orthogonalement, à la direction d'avance ;
- en position de travail normale, l'arbre d'entrée secondaire s'étend sensiblement parallèlement à l'arbre de sortie primaire ;
- en position de travail normale, l'arbre de sortie primaire et l'arbre d'entrée secondaire s'étendent sensiblement au même niveau afin de moins solliciter le premier et le deuxième joint universel ;
- le deuxième joint universel est situé entre la première articulation cylindrique et la deuxième articulation cylindrique ;
- le centre du deuxième joint universel est situé d'une part à une première distance d'un deuxième plan vertical dirigé dans la direction d'avance et contenant l'axe longitudinal de la première articulation cylindrique et d'autre part à une deuxième distance d'un plan vertical orthogonal à la direction d'avance et contenant l'axe longitudinal de la première articulation cylindrique ;
- la première distance est sensiblement égale à la deuxième distance permettant avantageusement à l'arbre de transmission télescopique de s'étendre en position de travail, comme en position de transport, sensiblement orthogonalement à la direction d'avance au travail ;
- la première articulation cylindrique est située plus près du deuxième joint universel que du premier joint universel ce qui permet avantageusement d'obtenir une course de l'arbre de transmission télescopique relativement petite ;
- la première articulation cylindrique est située, en vue de dessus, entre la deuxième articulation cylindrique et le point d'attelage inférieur situé du côté du mécanisme de coupe ;
- la première articulation cylindrique est, en vue de dessus, située dans le voisinage du point d'attelage inférieur situé du côté du mécanisme de coupe permettant ainsi de mieux centrer le mécanisme de coupe par rapport aux points d'attelage inférieurs en position de transport ;
- en position de travail, la première articulation cylindrique est, en vue de dessus, située sensiblement à mi-distance entre le deuxième joint universel et le point d'attelage inférieur situé du côté du mécanisme de coupe de manière à rapprocher, en position de transport, le mécanisme de coupe du châssis pour réduire le porte-à-faux de la machine de coupe lorsqu'elle est liée au véhicule moteur ;
- le dispositif de transmission primaire contient des organes de transmission permettant d'obtenir un régime de rotation sensiblement constant de l'arbre de sortie primaire à partir d'au moins deux régimes différents de l'arbre d'entrée primaire ;
- le dispositif de transmission primaire contient des organes de transmission comportant un arbre intermédiaire recevant le mouvement de rotation de l'arbre d'entrée primaire au moyen d'un couple de roues dentées coniques ;
- l'arbre intermédiaire s'étend transversalement de préférence sensiblement orthogonalement à la direction d'avance ;
- l'arbre intermédiaire s'étend sensiblement horizontalement ;
- l'arbre intermédiaire s'étend sensiblement parallèlement à l'arbre de sortie primaire ;
- le dispositif de transmission primaire contient des organes de transmission comportant une cascade de roues dentées cylindriques ;
- la machine de coupe comporte un mécanisme d'entraînement destiné d'une part à autoriser la transmission du mouvement de l'arbre d'entrée primaire au mécanisme de coupe et d'autre part à interdire la transmission du mouvement dudit mécanisme de coupe audit arbre d'entrée primaire ;
- le mécanisme d'entraînement est implanté entre le deuxième joint universel et l'arbre d'entrée secondaire ce qui permet d'éviter de créer de fortes contraintes dans ledit deuxième joint universel lors du pivotement du mécanisme de coupe dans la position de transport ;
- le dispositif de transmission primaire est essentiellement situé à l'extrémité du châssis la plus éloignée du mécanisme de coupe et constitue à cet effet un contrepoids qui contribue au délestage du mécanisme de coupe ;
- le dispositif de transmission primaire comporte un carter lié au châssis au moyen de bagues élastiques destinées à filtrer les vibrations en provenance du mécanisme de coupe et du véhicule moteur.

D'autres objets et caractéristiques de l'invention ressortiront de la description ci-après, avec référence aux dessins annexés qui représentent, à titre d'exemples non limitatifs, une forme de réalisation de la machine de coupe selon l'invention.

Sur ces dessins :
- la figure 1 représente, en position de travail, une machine de coupe selon l'invention vue de l'arrière et liée à un véhicule moteur ;
- la figure 2 représente la machine de coupe de la figure 1, vue de dessus ;
- la figure 3 représente la machine de coupe de la figure 1, en position de transport selon une vue de dessus,
- la figure 4 représente une vue en coupe du dispositif de transmission primaire seul, suivant le plan IV-IV défini sur la figure 1 ;
- la figure 5 représente une vue en coupe suivant le plan V-V défini sur la figure 4.

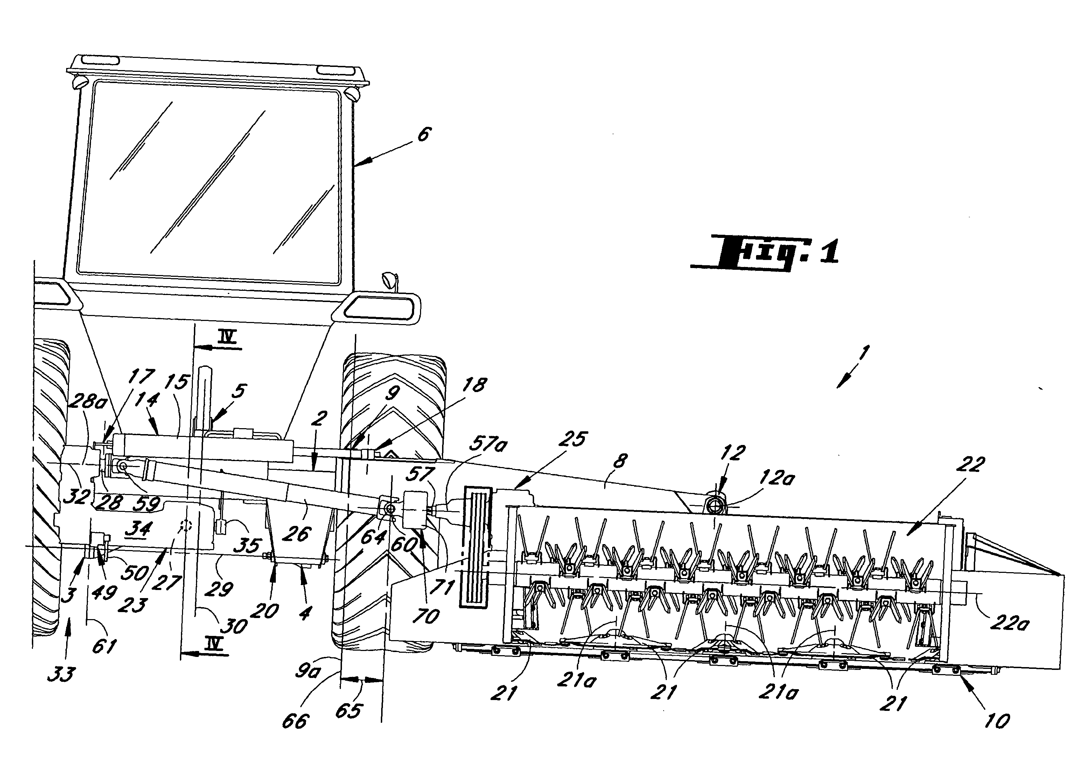

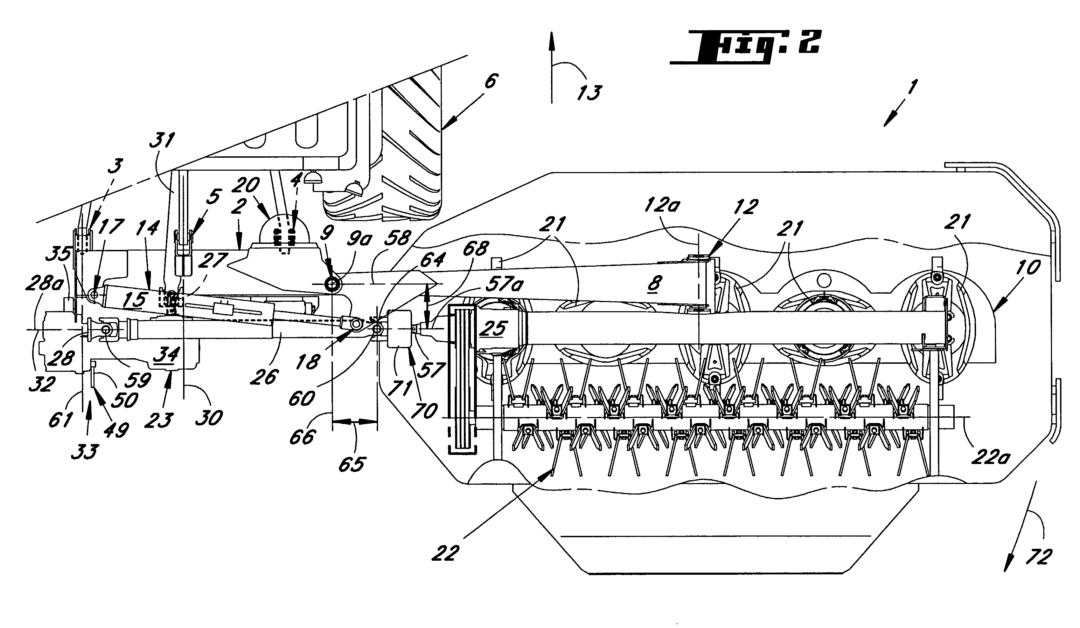

La machine de coupe (1), telle que représentée sur les figures 1 à 3, comporte un châssis (2) muni de deux points d'attelage inférieurs (3, 4) et d'un point d'attelage supérieur (5) au moyen desquels ladite machine de coupe (1) est liée à un véhicule moteur (6). Au châssis (2) est lié un bras de suspension (8) au moyen d'une première articulation cylindrique (9) d'axe longitudinal (9a) au moins sensiblement vertical. A l'extrémité du bras de suspension (8) est lié un mécanisme de coupe (10) au moyen d'une deuxième articulation cylindrique (12) d'axe longitudinal (12a) au moins sensiblement horizontal et au moins sensiblement parallèle à la direction d'avance (13) lorsque ledit mécanisme de coupe (10) est dans la position de travail tel que représentée sur les figures 1 et 2. En position de travail, le mécanisme de coupe (10) s'étend transversalement à la direction d'avance (13) et en position de transport, au moins sensiblement suivant la direction d'avance (13).

A cet effet est prévu un moyen de manoeuvre (14) comportant un vérin hydraulique (15) lié d'une part au châssis (2) au moyen d'une troisième articulation cylindrique (17) et d'autre part au bras de suspension (8) au moyen d'une quatrième articulation cylindrique (18). Le vérin hydraulique (15) est en communication avec un circuit hydraulique (non représenté) du véhicule moteur (6) et est destiné à faire pivoter le bras de suspension (8) et le mécanisme de coupe (10) de la position de travail dans la position de transport et inversement, autour de l'axe longitudinal (9a) de la première articulation cylindrique (9).

On notera également que la machine de coupe (1) est dotée d'un dispositif d'allégement (20) destiné à alléger le mécanisme de coupe (10) dans la position de travail.

On remarquera en sus que le mécanisme de coupe (10) comporte des éléments de coupe (21) destinés à couper le produit sur pied et un dispositif de conditionnement (22) destiné à traiter le produit préalablement coupé par lesdits éléments de coupe (21).

Les éléments de coupe (21) sont destinés à être entraînés en rotation autour d'axes de rotation verticaux (21a) respectifs alors que le dispositif de conditionnement (22) est destiné à être entraîné en rotation autour d'au moins un axe de rotation horizontal (22a).

A cet effet est prévu un dispositif de transmission primaire (23), un dispositif de transmission secondaire (25), un arbre de transmission télescopique (26) lequel est destiné à transmettre le mouvement du dispositif de transmission primaire (23) au dispositif de transmission secondaire (25).

Le dispositif de transmission primaire (23) est lié au châssis (2) et est muni d'un arbre d'entrée primaire (27) et d'un arbre de sortie primaire (28).

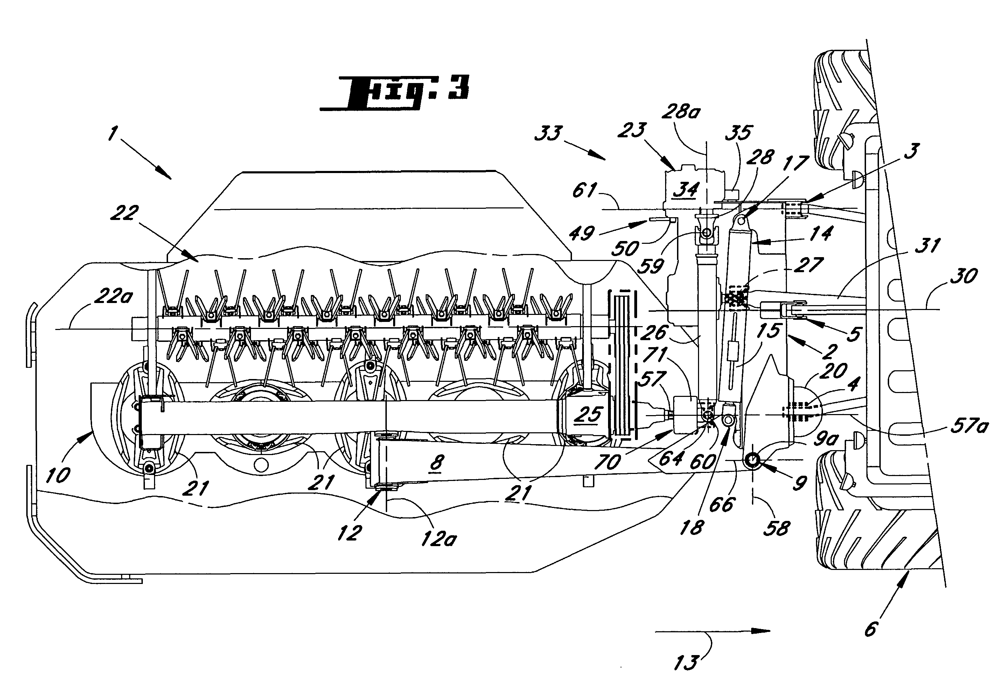

L'arbre d'entrée primaire (27) s'étend sensiblement suivant la direction d'avance (13) et est situé d'une part sensiblement dans un premier plan horizontal (29) contenant les deux points d'attelage inférieurs (3, 4) du châssis (2) et d'autre part sensiblement dans un plan vertical médian (30) dirigé suivant la direction d'avance (13) et s'étendant à mi-distance entre lesdits points d'attelage inférieurs (3, 4). A la lumière des figures 2 et 3, on voit qu'il est prévu un premier arbre de transmission (31) à joints universels au moyen duquel la machine de coupe (1) est destinée à être entraînée à partir du véhicule moteur (6). A cet effet le premier arbre de transmission (31) est lié d'une part à l'arbre d'entré primaire (27) et d'autre part à l'arbre d'entraînement (non représenté) du véhicule moteur (6). Un tel agencement permet avantageusement de positionner l'arbre d'entrée primaire (27) et l'arbre d'entraînement du véhicule moteur (6) sensiblement dans un même plan vertical qui est le plan vertical médian (30) et sensiblement dans un même plan horizontal lors du travail ce qui a pour effet de moins solliciter les joints universels du premier arbre de transmission (31) lors du travail.

L'arbre de sortie primaire (28) s'étend, quant à lui, au moins sensiblement orthogonalement à la direction d'avance (13) et est situé d'une part dans un deuxième plan horizontal (32), situé au-dessus du premier plan horizontal (29), et d'autre part du côté opposé au mécanisme de coupe (10) par rapport au plan vertical médian (30).

On remarquera que le dispositif de transmission primaire (23) est essentiellement situé à l'extrémité (33) du châssis (2) la plus éloignée du mécanisme de coupe (10), ce qui contribue à l'allégement dudit mécanisme de coupe (10).

On notera encore que le dispositif de transmission primaire (23) comporte un carter (34) lié au châssis (2) au moyen de bagues élastiques (35) afin de filtrer d'éventuelles vibrations en provenance du mécanisme de coupe (10) et du véhicule moteur (6). Une telle conception permet notamment d'améliorer les conditions de travail du dispositif de transmission primaire (23) et de prolonger sa durée de vie.

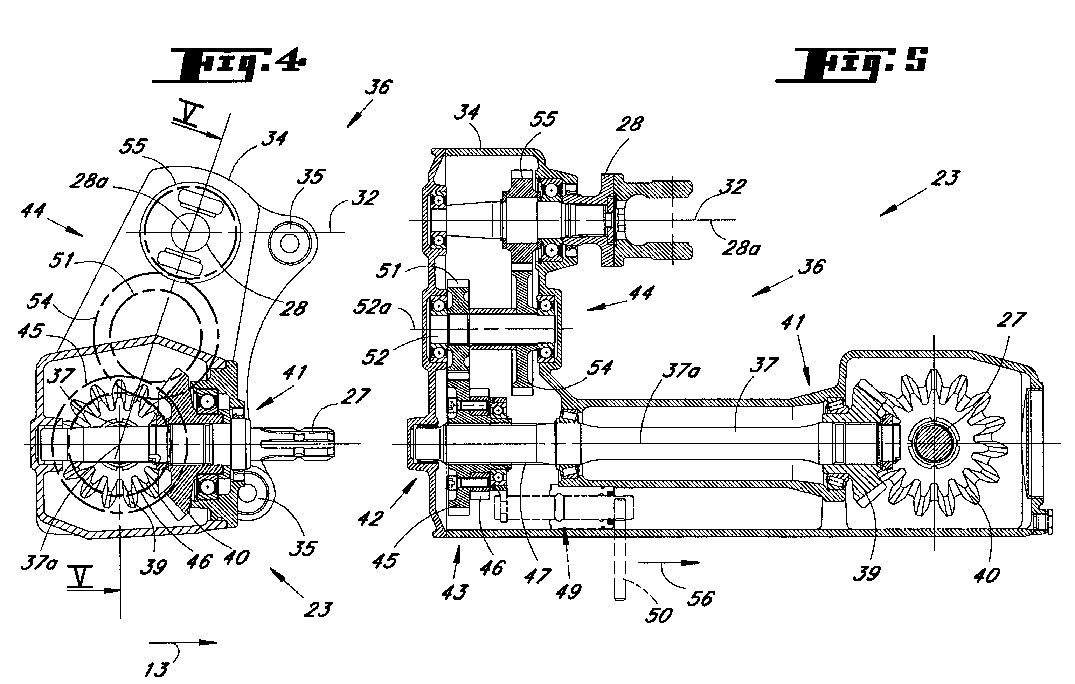

A la lumière des figures 4 et 5 on voit que le dispositif de transmission primaire (23) contient, à l'intérieur du carter (34), des organes de transmission (36) transmettant le mouvement de l'arbre d'entrée primaire (27) à l'arbre de sortie primaire (28). Ces organes de transmission (36) permettent d'obtenir à partir de régimes différents de l'arbre d'entrée primaire (27), un régime de rotation (R) sensiblement constant de l'arbre de sortie primaire (28).

A cet effet, selon l'exemple de réalisation représenté, les organes de transmission (36) comportent un premier arbre intermédiaire (37) recevant le mouvement de rotation de l'arbre d'entrée primaire (27) au moyen d'un couple de roues dentées coniques (39, 40).

Ce premier arbre intermédiaire (37) s'étend d'une part au moins sensiblement horizontalement et d'autre part au moins sensiblement orthogonalement à la direction d'avance (13) de manière à s'étendre au moins sensiblement parallèlement à l'arbre de sortie primaire (28). La roue dentée conique (39) est fixée sur le premier arbre intermédiaire (37) à l'une (41) des extrémités (41, 42) de ce dernier, tandis qu'à l'autre extrémité (42) est prévu un crabot (43).

On notera encore que les organes de transmission (36) comportent une cascade de roues dentées cylindriques (44) destinées à acheminer le mouvement de rotation du premier arbre intermédiaire (37) vers l'arbre de sortie primaire (28).

Selon l'exemple représenté, les organes de transmission (36) permettent une sélection de deux vitesses de rotation de l'arbre d'entrée primaire (27) pour une vitesse de rotation de l'arbre de sortie primaire (28) sensiblement constante.

A cet effet, le crabot (43) comporte une première et une deuxième roue dentée cylindrique (45, 46) solidaires l'une de l'autre et liées au premier arbre intermédiaire (37) au moyen de cannelures (47). Les roues dentées cylindriques (45, 46) peuvent être déplacées le long de l'axe longitudinal de rotation (37a) du premier arbre intermédiaire (37) au moyen d'un dispositif de commande (49) (représenté en traits mixtes) comportant un levier de sélection (50). Ce levier de sélection (50) s'étend à l'extérieur du carter (34) de manière à être aisément accessible lorsque l'opérateur souhaite sélectionner un autre régime de rotation de l'arbre d'entrée primaire (27).

Sur la figure 5, la première vitesse est sélectionnée. A cet effet, le régime de rotation de l'arbre d'entrée primaire (27) est multiplié pour obtenir un régime de rotation (R) sensiblement constant de l'arbre de sortie primaire (28). Dans ce cas de figure la première roue dentée cylindrique (45) engrène avec une troisième roue dentée cylindrique (51) diamétralement plus petite que la roue (45).

Ladite roue (51) est fixée sur un deuxième arbre intermédiaire (52) d'axe longitudinal de rotation (52a) au moins parallèle à l'axe longitudinal de rotation (37a) du premier arbre intermédiaire (37). Sur le deuxième arbre intermédiaire (52) est également fixée une quatrième roue dentée cylindrique (54) diamétralement plus grande que la troisième roue (51) et la deuxième roue (46). Cette quatrième roue (54) engrène avec une cinquième roue dentée cylindrique (55) diamétralement plus petite que la roue (54) fixée sur l'arbre de sortie primaire (28) d'axe longitudinal de rotation (28a) au moins sensiblement parallèle à l'axe longitudinale de rotation (37a).

Lorsque l'opérateur souhaite sélectionner la deuxième vitesse, il déplace le levier de sélection (50) dans le sens de la flèche (56) ce qui a pour effet de déplacer les roues (45, 46) sur le premier arbre intermédiaire (37) au moyen des cannelures (47) dans le sens de ladite flèche (56) et, à cet effet de désengrener la roue (45) de la troisième roue (51) pour engrener la deuxième roue (46) directement avec la quatrième roue (54).

Lorsque la première vitesse est sélectionnée le mouvement à l'intérieur du carter (34) passe par l'arbre d'entrée primaire (27), la roue dentée conique (40), la roue dentée conique (39), le premier arbre intermédiaire (37), la première roue dentée cylindrique (45) du crabot (43), la troisième roue dentée cylindrique (51), le deuxième arbre intermédiaire (52), la quatrième roue dentée cylindrique (54), la cinquième roue dentée cylindrique (55) et l'arbre de sortie primaire (28).

Lorsque la deuxième vitesse est sélectionnée le régime de rotation de l'arbre d'entrée primaire (27) est multiplié un peu moins pour obtenir le régime de rotation (R) constant de l'arbre de sortie primaire (28). Dans ce cas de figure le mouvement à l'intérieur du carter (34) passe par l'arbre d'entrée primaire (27), la roue dentée conique (40), la roue dentée conique (39), le premier arbre intermédiaire (37), la deuxième roue dentée cylindrique (46) du crabot (43), la quatrième roue dentée cylindrique (54), la cinquième roue dentée cylindrique (55) et l'arbre de sortie primaire (28).

Le dispositif de transmission secondaire (25) est fixé au mécanisme de coupe (10) d'une manière connue de l'homme de l'art de sorte à entraîner en rotation les éléments de coupe (21) et le dispositif de conditionnement (22) dudit mécanisme de coupe (10). Le dispositif de transmission secondaire (25) est muni d'un arbre d'entrée secondaire (57) qui s'étend, en position de travail normal, lorsque le mécanisme de coupe (10) s'étend sensiblement dans un plan parallèle au premier plan horizontal (29), sensiblement parallèlement à l'arbre de sortie primaire (28).

En outre, l'arbre d'entrée secondaire (57) s'étend d'une part, vue de l'arrière, entre la première articulation cylindrique (9) et la deuxième articulation cylindrique (12) (de préférence plus près de ladite première articulation (9)) et d'autre part, vue de dessus, derrière un premier plan vertical (58) orthogonal à la direction d'avance (13) et contenant l'axe longitudinal (9a) de la première articulation cylindrique (9).

De surcroît, l'arbre d'entrée secondaire (57) s'étend, en position de travail normale, au moins sensiblement au même niveau que l'arbre de sortie primaire (28).

L'arbre de transmission télescopique (26) implanté entre l'arbre de sortie primaire (28) et l'arbre d'entrée secondaire (57), comporte un premier joint universel (59) situé du côté dudit arbre de sortie primaire (28) et un deuxième joint universel (60) situé du côté dudit arbre d'entrée secondaire (57).

Le premier joint universel (59) est situé sensiblement dans un deuxième plan vertical (61) dirigé suivant la direction d'avance (13) et contenant le point d'attelage inférieur (3) éloigné du mécanisme de coupe (10). Selon l'exemple représenté, le premier joint universel (59) est situé d'une part quelque peu à côté du premier plan vertical (61) de manière à s'étendre entre ce dernier et le plan vertical médian (30) et d'autre part plus haut que l'arbre d'entrée primaire (27).

Le deuxième joint universel (60) quant à lui est situé, vue de l'arrière, entre la première articulation cylindrique (9) et la deuxième articulation cylindrique (12). Plus précisément, en position de travail, le centre (64) du deuxième joint universel (60) est situé d'une part à une première distance (65) d'un troisième plan vertical (66) dirigé dans la direction d'avance (13) et contenant l'axe longitudinal (9a) de la première articulation cylindrique (9), et d'autre part à une deuxième distance (68) du premier plan vertical (58). On remarquera en sus que la première distance (65) est sensiblement égale à la deuxième distance (68) de manière que l'arbre de transmission télescopique (26) s'étende, en position de travail comme en position de transport, transversalement, de préférence sensiblement orthogonalement à la direction d'avance (13).

La première articulation cylindrique (9) quant à elle est située plus près du deuxième joint universel (60) que du premier joint universel (59). A la lumière de la figure 2, on voit également qu'en position de travail, la première articulation cylindrique (9) est sensiblement située entre la deuxième articulation cylindrique (12) et le point d'attelage inférieur (4) situé du côté du mécanisme de coupe (10), plus précisément sensiblement à mi-distance entre le deuxième joint universel (60) et ledit point d'attelage inférieur (4).

La machine de coupe (1) est également munie d'un mécanisme d'entraînement (70) destiné d'une part à autoriser la transmission du mouvement de l'arbre d'entrée primaire (27) au mécanisme de coupe (10) et d'autre part à interdire la transmission du mouvement dudit mécanisme de coupe (10) audit arbre d'entrée primaire (27).

Ce mécanisme d'entraînement (70) comporte une roue libre (71) implantée entre le deuxième joint universel (60) et l'arbre d'entrée secondaire (57).

La machine de coupe (1) fonctionne de la manière suivante.

En position de travail (figure 1 et 2), le mécanisme de coupe (10) et l'arbre de transmission télescopique (26) s'étendent sensiblement orthogonalement à la direction d'avance (13) et le vérin hydraulique (15) est dans sa position allongée. Dans cette position de travail les éléments de coupe (21) et le dispositif de conditionnement (22) du mécanisme de coupe (10) sont destinés à être animés au moyen du dispositif de transmission secondaire (25) lequel reçoit le mouvement du véhicule moteur (6) via le premier arbre de transmission (31), le dispositif de transmission primaire (23), l'arbre de transmission télescopique (26) et la roue libre (71).

Lorsque les éléments de coupe (21) et le dispositif de conditionnement (22) sont entraînés, la machine de coupe (1) est mue dans un champ couvert de plantes à couper au moyen du véhicule moteur (6).

Lorsque l'opérateur souhaite mettre la machine de coupe (1) dans la position de transport (figure 3), il coupe dans un premier temps l'entraînement de la machine de coupe (1) et commande à partir du véhicule moteur (6) le vérin hydraulique (15) qui va à cet effet se raccourcir et faire pivoter le bras de suspension (8) et le mécanisme de coupe (10) autour de l'axe longitudinal (9a) de la première articulation cylindrique (9) dans le sens de la flèche (72) représentée sur la figure 2.

Lorsque le vérin hydraulique (15) vient en fin de course, le mécanisme de coupe (10), le bras de suspension (8) et l'axe longitudinal (57a) de l'arbre d'entrée secondaire (57) s'étendent sensiblement parallèlement à la direction d'avance (13) tandis que l'arbre de transmission télescopique (26) s'étend sensiblement orthogonalement à ladite direction d'avance (13).

Pour mettre la machine de coupe de la position de transport dans la position de travail, l'opérateur effectue les opérations inverses à celles décrites ci-dessus.

Lors du pivotement du bras de suspension (8) et du mécanisme de coupe (10) dans la position de transport, l'arbre de transmission télescopique (26) se raccourcit et s'articule sur le premier et le deuxième joint universel (59, 60).

On notera que lorsque l'opérateur coupe l'entraînement de la machine de coupe (1), les éléments de coupe (21) et le dispositif de conditionnement (22) sont encore animés quelques instants en raison de leur inertie.

Comme décrit ci-avant, la roue libre (71) est située entre le deuxième joint universel (60) et l'arbre d'entrée secondaire (57) de manière à ne pas autoriser la transmission du mouvement d'inertie des éléments de coupe (21) et du dispositif de conditionnement (22) à l'arbre de transmission télescopique (26). Dans ce cas de figure, lorsque l'opérateur coupe l'entraînement, ledit arbre de transmission télescopique (26) s'immobilise ce qui permet de pivoter le mécanisme de coupe (10) et le bras de suspension (8) dans la position de transport sans attendre l'arrêt total des éléments de coupe (21) et du dispositif de conditionnement (22).

Finalement, différentes modifications restent possibles, notamment en ce qui concerne la constitution des divers éléments ou par substitution d'équivalents techniques, sans pour autant sortir du domaine de protection défini dans les revendications.

Il est notamment parfaitement possible de concevoir un dispositif de transmission primaire (23) ne permettant pas de sélectionner différents régimes de l'arbre d'entrée primaire (27).

Il est également imaginable que les organes de transmission (36) du dispositif de transmission primaire (23) comportent un variateur de vitesse permettant de multiplier ou de démultiplier dans une infinité de régimes, le régime de rotation de l'arbre d'entrée primaire (27) pour un régime de rotation (R) sensiblement constant de l'arbre de sortie primaire (28).

## Revendications

1. Machine de coupe comportant
- un châssis (2) muni de deux points d'attelage inférieurs (3, 4) et d'un point d'attelage supérieur (5) destinés à être liés à un véhicule moteur (6), ledit châssis (2) présentant un plan vertical médian (30) dirigé suivant la direction d'avance (13) et s'étendant à mi-distance entre les deux points d'attelage inférieurs (3, 4) ;
- un mécanisme de coupe (10) comportant au moins un élément de coupe (21) et s'étendant lors du travail transversalement à la direction d'avance (13) (position de travail) et, lors du transport, au moins sensiblement suivant la direction d'avance (13) (position de transport) ;
- un bras de suspension (8) lié au châssis (2) au moyen d'une première articulation cylindrique (9) d'axe longitudinal (9a) au moins sensiblement vertical et au mécanisme de coupe (10) au moyen d'une deuxième articulation cylindrique (12) d'axe longitudinal (12a) au moins sensiblement horizontal et au moins sensiblement parallèle à la direction d'avance (13) lorsque ledit mécanisme de coupe (10) est dans la position de travail ;
- un dispositif de transmission primaire (23) lié au châssis (12) est muni d'un arbre d'entrée primaire (27) et d'un arbre de sortie primaire (28) ;
- un dispositif de transmission secondaire (25) lié directement ou indirectement au mécanisme de coupe (10) et destiné à animer 1' (les) élément(s) de coupe (21) ;
- un arbre de transmission télescopique (26) implanté entre l'arbre de sortie primaire (28) et un arbre d'entrée secondaire (57) du dispositif de transmission secondaire (25) et comportant un premier joint universel (59) situé du côté dudit arbre de sortie primaire (28) et un deuxième joint universel (60) situé du côté dudit arbre d'entrée secondaire (57),
***caractérisée en ce que*** le premier joint universel (59) est situé du côté du plan vertical médian (30) opposé à celui où s'étend le mécanisme de coupe (10) en position de travail.

2. Machine de coupe selon la revendication 1, ***caractérisée en ce*** que le premier joint universel (59) est situé sensiblement dans un plan vertical (61) dirigé suivant la direction d'avance (13) et contenant le point d'attelage inférieur (3) éloigné du mécanisme de coupe (10).

3. Machine de coupe selon la revendication 1 ou 2, ***caractérisée en ce*** que le premier joint universel (59) est situé plus haut que l'arbre d'entrée primaire (27).

4. Machine de coupe selon l'une quelconque des revendications 1 à 3, ***caractérisée en ce*** que l'arbre d'entrée primaire (27) est situé sensiblement dans le plan vertical médian (30).

5. Machine de coupe selon l'une quelconque des revendications 1 à 4, ***caractérisée en ce*** que l'arbre d'entrée primaire (27) est situé sensiblement dans un plan horizontal (29) contenant les deux points d'attelage inférieurs (3, 4).

6. Machine de coupe selon l'une quelconque des revendications 1 à 5, ***caractérisée en ce*** que l'arbre d'entrée primaire (27) s'étend sensiblement suivant la direction d'avance (13).

7. Machine de coupe selon l'une quelconque des revendications 1 à 6, ***caractérisée en ce*** que l'arbre de sortie primaire (28) s'étend transversalement, de préférence orthogonalement, à la direction d'avance (13).

8. Machine de coupe selon l'une quelconque des revendications 1 à 7, ***caractérisée en ce*** que en position de travail normale, l'arbre d'entrée secondaire (57) s'étend sensiblement parallèlement à l'arbre de sortie primaire (28).

9. Machine de coupe selon l'une quelconque des revendications 1 à 8, ***caractérisée en ce*** que en position de travail normale, l'arbre de sortie primaire (28) et l'arbre d'entrée secondaire (57) s'étendent sensiblement au même niveau.

10. Machine de coupe selon l'une quelconque des revendications 1 à 9, ***caractérisée en ce*** que le deuxième joint universel (60) est situé entre la première articulation cylindrique (9) et la deuxième articulation cylindrique (12).

11. Machine de coupe selon la revendication 10, ***caractérisée en ce*** que le centre (64) du deuxième joint universel (60) est situé d'une part à une première distance (65) d'un plan vertical (66) dirigé dans la direction d'avance (13) et contenant l'axe longitudinal (9a) de la première articulation cylindrique (9), et d'autre part à une deuxième distance (68) d'un plan vertical (58) orthogonal à la direction d'avance (13) et contenant l'axe longitudinal (9a) de la première articulation cylindrique (9).

12. Machine de coupe selon la revendication 11, ***caractérisée en ce*** que la première distance (65) est sensiblement égale à la deuxième distance (68).

13. Machine de coupe selon l'une quelconque des revendications 1 à 12, ***caractérisée en ce*** que la première articulation cylindrique (9) est située plus près du deuxième joint universel (60) que du premier joint universel (59).

14. Machine de coupe selon l'une quelconque des revendications 1 à 13, ***caractérisée en ce*** que la première articulation cylindrique (9) est située, en vue de dessus, entre la deuxième articulation cylindrique (12) et le point d'attelage inférieur (4) situé du côté du mécanisme de coupe (10).

15. Machine de coupe selon la revendication 14, ***caractérisée en ce*** que la première articulation cylindrique (9) est, en vue de dessus, située dans le voisinage dudit point d'attelage inférieur (4) situé du côté du mécanisme de coupe (10).

16. Machine de coupe selon la revendication 15, ***caractérisée en ce*** que, en position de travail, la première articulation cylindrique (9) est, en vue de dessus, située sensiblement à mi-distance entre le deuxième joint universel (60) et le point d'attelage inférieur (4) situé du côté du mécanisme de coupe (10).

17. Machine de coupe selon l'une quelconque des revendications 1 à 16, ***caractérisée en ce*** que le dispositif de transmission primaire (23) contient des organes de transmission (36) permettant d'obtenir un régime de rotation (R) sensiblement constant de l'arbre de sortie primaire à partir d'au moins deux régimes différents de l'arbre d'entrée primaire (27).

18. Machine de coupe selon l'une quelconque des revendications 1 à 17, ***caractérisée en ce*** que le dispositif de transmission primaire (23) contient des organes de transmission (36) comportant un arbre intermédiaire (37) recevant le mouvement de rotation de l'arbre d'entrée primaire (27) au moyen d'un couple de roues dentées coniques (39, 40).

19. Machine de coupe selon la revendication 18, ***caractérisée en ce*** que l'arbre intermédiaire (37) s'étend transversalement, de préférence sensiblement orthogonalement, à la direction d'avance (13).

20. Machine de coupe selon la revendication 19, ***caractérisée en ce*** que l'arbre intermédiaire (37) s'étend sensiblement horizontalement.

21. Machine de coupe selon la revendication 20, ***caractérisée en ce*** que l'arbre intermédiaire (37) s'étend sensiblement parallèlement à l'arbre de sortie primaire (28).

22. Machine de coupe selon l'une quelconque des revendications 1 à 21, ***caractérisée en ce*** que le dispositif de transmission primaire (23) contient des organes de transmission (36) comportant une cascade de roues dentées cylindriques (44).

23. Machine de coupe selon l'une quelconque des revendications 1 à 22, ***caractérisée en ce*** qu'il est prévu un mécanisme d'entraînement (70) destiné d'une part à autoriser la transmission du mouvement de l'arbre d'entrée primaire (27) au mécanisme de coupe (10) et d'autre part à interdire la transmission du mouvement dudit mécanisme de coupe (10) audit arbre d'entrée primaire (27).

24. Machine de coupe selon la revendication 23, ***caractérisée en ce*** que le mécanisme d'entraînement (70) est implanté entre le deuxième joint universel (60) et l'arbre d'entrée secondaire (57).

25. Machine de coupe selon l'une quelconque des revendications 1 à 24, ***caractérisée en ce*** que le dispositif de transmission primaire (23) est essentiellement situé à l'extrémité (33) du châssis (2) la plus éloignée du mécanisme de coupe (10).

26. Machine de coupe selon l'une quelconque des revendications 1 à 25, ***caractérisée en ce*** que le dispositif de transmission primaire (23) comporte un carter (34) lié au châssis (2) au moyen de bagues élastiques (35).

## Patentansprüche

1. Schneidmaschine mit:
- einem Rahmen (2), der mit zwei unteren Kupplungspunkten (3, 4) und einem oberen Kupplungspunkt (5) versehen ist, die dazu bestimmt sind, mit einem Motorfahrzeug (6) verbunden zu werden, wobei der Rahmen (2) eine vertikale Mittelebene (30) aufweist, die längs der Fahrtrichtung (13) ausgerichtet ist und sich auf halber Strecke zwischen den zwei unteren Kupplungspunkten (3, 4) erstreckt;
- einem Schneidmechanismus (10) mit mindestens einem Schneidelement (21), das sich im Betrieb quer zur Fahrtrichtung (13) (Arbeitsstellung) und während des Transports zumindest im wesentlichen längs der Fahrtrichtung (13) (Transportstellung) erstreckt;
- einem Tragarm (8), der mit dem Rahmen (2) mittels eines ersten Drehgelenks (9) mit einer zumindest im wesentlichen vertikalen Längsachse (9a) und mit dem Schneidmechanismus (10) mittels eines zweiten Drehgelenks (12) verbunden ist, dessen Längsachse (12a) zumindest im wesentlichen horizontal und zumindest im wesentlichen parallel zu der Fahrtrichtung (13) ist, wenn der Schneidmechanismus (10) in der Arbeitsstellung ist;
- einer primären Kraftübertragungsvorrichtung (23), die mit dem Rahmen (2) verbunden und mit einer primären Eingangswelle (27) und einer primären Ausgangswelle (28) ausgestattet ist;
- einer sekundären Kraftübertragungsvorrichtung (25), die direkt oder indirekt mit dem Schneidmechanismus (10) verbunden ist und dazu bestimmt ist, das (die) Schneidelement(e) (21) anzutreiben;
- einer teleskopischen Übertragungswelle (26), die zwischen der primären Ausgangswelle (28) und der sekundären Eingangswelle (57) der sekundären Kraftübertragungsvorrichtung (25) angeordnet ist und ein sich auf der Seite der primären Ausgangswelle (28) erstreckendes erstes Kreuzgelenk (59) und ein sich auf der Seite der sekundären Eingangswelle (57) erstreckendes zweites Kreuzgelenk (60) aufweist,
***dadurch gekennzeichnet*,** daß das erste Kreuzgelenk (59) sich auf der Seite der vertikalen Mittelebene (30) erstreckt, gegenüber derjenigen Seite, auf der sich der Schneidmechanismus (10) in der Arbeitsstellung erstreckt.

2. Schneidmaschine gemäß Anspruch 1, ***dadurch gekennzeichnet*,** daß das erste Kreuzgelenk (59) im wesentlichen in einer vertikalen Ebene (61) liegt, die längs der Fahrtrichtung (13) ausgerichtet ist und den unteren, von dem Schneidmechanismus (10) entfernt liegenden Kupplungspunkt (3) enthält.

3. Schneidmaschine gemäß Anspruch 1 oder 2, ***dadurch gekennzeichnet*,** daß das erste Kreuzgelenk (59) höher liegt als die primäre Eingangswelle (27).

4. Schneidmaschine gemäß irgend einem der Ansprüche 1 bis 3, ***dadurch gekennzeichnet*,** daß die primäre Eingangswelle (27) im wesentlichen in der vertikalen Mittelebene (30) liegt.

5. Schneidmaschine gemäß irgend einem der Ansprüche 1 bis 4, ***dadurch gekennzeichnet*,** daß die primäre Eingangswelle (27) im wesentlichen in einer horizontalen Ebene (29) liegt, die die zwei unteren Kupplungspunkte (3, 4) enthält.

6. Schneidmaschine gemäß irgend einem der Ansprüche 1 bis 5, ***dadurch gekennzeichnet*,** daß die primäre Eingangswelle (27) sich im wesentlichen längs der Fahrtrichtung (13) erstreckt.

7. Schneidmaschine gemäß irgend einem der Ansprüche 1 bis 6, ***dadurch gekennzeichnet*,** daß die primäre Ausgangswelle (28) sich quer, vorzugsweise senkrecht, zur Fahrtrichtung (13) erstreckt.

8. Schneidmaschine gemäß irgend einem der Ansprüche 1 bis 7, ***dadurch gekennzeichnet*,** daß die sekundäre Eingangswelle (57) sich in der normalen Arbeitsstellung im wesentlichen parallel zur primären Ausgangswelle (28) erstreckt.

9. Schneidmaschine gemäß irgend einem der Ansprüche 1 bis 8, ***dadurch gekennzeichnet,*** daß die primäre Ausgangswelle (28) und die sekundäre Eingangswelle (57) sich in der normalen Arbeitsstellung im wesentlichen auf gleicher Höhe erstrecken.

10. Schneidmaschine gemäß irgend einem der Ansprüche 1 bis 9, ***dadurch gekennzeichnet*,** daß das zweite Kreuzgelenk (60) zwischen dem ersten Drehgelenk (9) und dem zweiten Drehgelenk (12) liegt.

11. Schneidmaschine gemäß Anspruch 10, ***dadurch gekennzeichnet***, daß das Zentrum (64) des zweiten Kreuzgelenks (60) zum einen in einem ersten Abstand (65) von einer vertikalen Ebene (66) liegt, die in Fahrtrichtung (13) ausgerichtet ist und die Längsachse (9a) des ersten Drehgelenks (9) enthält, und zum anderen in einem zweiten Abstand (68) von einer vertikalen Ebene (58) liegt, die senkrecht zur Fahrtrichtung (13) ausgerichtet ist und die Längsachse (9a) des ersten Drehgelenks (9) enthält.

12. Schneidmaschine gemäß Anspruch 11, ***dadurch gekennzeichnet,*** daß der erste Abstand (65) im wesentlichen gleich dem zweiten Abstand (68) ist.

13. Schneidmaschine gemäß irgend einem der Ansprüche 1 bis 12, ***dadurch gekennzeichnet,*** daß das erste Drehgelenk (9) näher zu dem zweiten Kreuzgelenk (60) liegt als zu dem ersten Kreuzgelenk (59).

14. Schneidmaschine gemäß irgend einem der Ansprüche 1 bis 13, ***dadurch gekennzeichnet,*** daß das erste Drehgelenk (9), von oben gesehen, zwischen dem zweiten Drehgelenk (12) und dem unteren Kupplungspunkt (4) liegt, der sich auf der Seite des Schneidmechanismus (10) erstreckt.

15. Schneidmaschinen gemäß Anspruch 14, ***dadurch gekennzeichnet***, daß das erste Drehgelenk (9), von oben gesehen, in der Umgebung des unteren Kupplungspunkts (4) liegt, der sich auf der Seite des Schneidmechanismus (10) erstreckt.

16. Schneidmaschine gemäß Anspruch 15, ***dadurch gekennzeichnet***, daß in der Arbeitsstellung das erste Drehgelenk (9), von oben gesehen, im wesentlichen auf halber Strecke zwischen dem zweiten Kreuzgelenk (60) und dem unteren Kupplungspunkt (4) liegt, der sich auf der Seite des Schneidmechanismus (10) erstreckt.

17. Schneidmaschine gemäß irgend einem der Ansprüche 1 bis 16, ***dadurch gekennzeichnet,*** daß die primäre Kraftübertragungsvorrichtung (23) Kraftübertragungselemente (36) enthält, die es ermöglichen, auf der Basis zumindest zweier unterschiedlicher Drehzahlbereiche der primären Eingangswelle (27) einen im wesentlichen konstanten Drehzahlbereich (R) der primären Ausgangswelle zu erhalten.

18. Schneidmaschine gemäß irgend einem der Ansprüche 1 bis 17, ***dadurch gekennzeichnet*,** daß die primäre Kraftübertragungsvorrichtung (23) Kraftübertragungselemente (36) enthält, die eine Zwischenwelle (37) umfassen, die die Drehbewegung der primären Eingangswelle (27) mittels eines Paares konischer Zahnräder (39, 40) aufnimmt.

19. Schneidmaschine gemäß Anspruch 18, ***dadurch gekennzeichnet*,** daß die Zwischenwelle (37) sich quer, vorzugsweise im wesentlichen senkrecht, zur Fahrtrichtung (13) erstreckt.

20. Schneidmaschine gemäß Anspruch 19, ***dadurch gekennzeichnet*,** daß die Zwischenwelle (37) sich im wesentlichen horizontal erstreckt.

21. Schneidmaschine gemäß Anspruch 20, ***dadurch gekennzeichnet*,** daß die Zwischenwelle (37) sich im wesentlichen parallel zur primären Ausgangswelle (28) erstreckt.

22. Schneidmaschine gemäß irgend einem der Ansprüche 1 bis 21, ***dadurch gekennzeichnet,*** daß die primäre Kraftübertragungsvorrichtung (23) Kraftübertragungselemente (36) enthält, die eine Kaskade zylindrischer Zahnräder (44) umfassen.

23. Schneidmaschine gemäß irgend einem der Ansprüche 1 bis 22, ***dadurch gekennzeichnet***, daß ein Antriebsmechanismus (70) vorgesehen ist, der zum einen dazu bestimmt ist, die Übertragung der Bewegung der primären Eingangswelle (27) zum Schneidmechanismus (10) zu gestatten, und zum anderen die Übertragung der Bewegung des Schneidmechanismus (10) zur primären Eingangswelle (27) zu unterbinden.

24. Schneidmaschine gemäß Anspruch 23, ***dadurch gekennzeichnet*,** daß der Antriebsmechanismus (70) zwischen dem zweiten Kreuzgelenk (60) und der sekundären Eingangswelle (57) angeordnet ist.

25. Schneidmaschine gemäß irgend einem der Ansprüche 1 bis 24, ***dadurch gekennzeichnet*,** daß die primäre Kraftübertragungsvorrichtung (23) im wesentlichen an dem Ende (33) des Rahmens (2) liegt, das am weitesten entfernt vom Schneidmechanismus (10) ist.

26. Schneidmaschine gemäß irgend einem der Ansprüche 1 bis 25, ***dadurch gekennzeichnet,*** daß die primäre Kraftübertragungsvorrichtung (23) ein Gehäuse (34) umfaßt, das mit dem Rahmen (2) mittels elastischer Ringe (35) verbunden ist.

## Claims

1. Cutting machine comprising:
- a frame (2) equipped with two lower hitching points (3, 4) and an upper hitching point (5) which are intended to be connected to a motor vehicle (6), the said frame (2) having a vertical mid-plane (30) directed in the direction of forward travel (13) and extending mid-way between the two lower hitching points (3, 4);
- a cutting mechanism (10) comprising at least one cutting element (21) and extending, during work, transversely to the direction of forward travel (13) (work position) and, during transport, at least substantially in the direction of forward travel (13) (transport position);
- a suspension arm (8) connected to the frame (2) by means of a first cylindrical articulation (9), the longitudinal axis (9a) of which is at least substantially vertical, and to the cutting mechanism (10) by means of a second cylindrical articulation (12), the longitudinal axis (12a) of which is at least substantially horizontal and at least substantially parallel to the direction of forward travel (13) when the said cutting mechanism (10) is in the work position;
- a primary transmission device (23) connected to the frame (2) is equipped with a primary input shaft (27) and with a primary output shaft (28);
- a secondary transmission device (25) connected directly or indirectly to the cutting mechanism (10) and intended to drive the cutting element(s) (21);
- a telescopic transmission shaft (26) fitted between the primary output shaft (28) and a secondary input shaft (57) belonging to the secondary transmission device (25) and comprising a first universal joint (59) located at the same side as the said primary output shaft (28) and a second universal joint (60) located at the same side as the said secondary input shaft (57),
***characterized in*** that the first universal joint (59) is located on the opposite side of the vertical mid-plane (30) to the side on which the cutting mechanism (10) extends in the work position.

2. Cutting machine according to Claim 1, ***characterized in*** that the first universal joint (59) is located substantially in a vertical plane (61) directed in the direction of forward travel (13) and containing the lower hitching point (3) farthest from the cutting mechanism (10).

3. Cutting machine according to Claim 1 or 2, ***characterized in*** that the first universal joint (59) is located higher up than the primary input shaft (27).

4. Cutting machine according to any one of Claims 1 to 3, ***characterized in*** that the primary input shaft (27) is located substantially in the vertical mid-plane (30).

5. Cutting machine according to any one of Claims 1 to 4, ***characterized in*** that the primary input shaft (27) is located substantially in a horizontal plane (29) containing the two lower hitching points (3, 4).

6. Cutting machine according to any one of Claims 1 to 5, ***characterized in*** that the primary input shaft (27) extends substantially in the direction of forward travel (13).

7. Cutting machine according to any one of Claims 1 to 6, ***characterized in*** that the primary output shaft (28) extends transversely, preferably orthogonally, to the direction of forward travel (13).

8. Cutting machine according to any one of Claims 1 to 7, characterized in that in the normal work position, the secondary input shaft (57) extends substantially parallel to the primary output shaft (28).

9. Cutting machine according to any one of Claims 1 to 8, ***characterized in*** that in the normal work position, the primary output shaft (28) and the secondary input shaft (57) extend substantially at the same level.

10. Cutting machine according to any one of Claims 1 to 9, ***characterized in*** that the second universal joint (60) is located between the first cylindrical articulation (9) and the second cylindrical articulation (12).

11. Cutting machine according to Claim 10, ***characterized in*** that the centre (64) of the second universal joint (60) is located, on the one hand, a first distance (65) away from a vertical plane (66) directed in the direction of forward travel (13) and containing the longitudinal axis (9a) of the first cylindrical articulation (9) and, on the other hand, a second distance (68) away from a vertical plane (58) orthogonal to the direction of forward travel (13) and containing the longitudinal axis (9a) of the first cylindrical articulation (9).

12. Cutting machine according to Claim 11, ***characterized in*** that the first distance (65) is substantially equal to the second distance (68).

13. Cutting machine according to any one of Claims 1 to 12, ***characterized in*** that the first cylindrical articulation (9) is located closer to the second universal joint (60) than to the first universal joint (59).

14. Cutting machine according to any one of Claims 1 to 13, ***characterized in*** that the first cylindrical articulation (9) is located, when viewed from above, between the second cylindrical articulation (12) and the lower hitching point (4) located on the same side as the cutting mechanism (10).

15. Cutting machine according to Claim 14, ***characterized in*** that the first cylindrical articulation (9) is, when viewed from above, located in the vicinity of the said lower hitching point (4) located on the same side as the cutting mechanism (10).

16. Cutting machine according to Claim 15, ***characterized in*** that, in the work position, the first cylindrical articulation (9) is, when viewed from above, located substantially mid-way between the second universal joint (60) and the lower hitching point (4) located on the same side as the cutting mechanism (10).

17. Cutting machine according to any one of Claims 1 to 16, ***characterized in*** that the primary transmission device (23) contains transmission elements (36) making it possible to obtain an substantially constant rotational speed (R) of the primary output shaft from at least two different speeds of the primary input shaft (27).

18. Cutting machine according to any one of Claims 1 to 17, ***characterized in*** that the primary transmission device (23) contains transmission elements (36) comprising an intermediate shaft (37) receiving the rotational motion of the primary input shaft (27) by means of a pair of bevel gears (39, 40).

19. Cutting machine according to Claim 18, ***characterized in*** that the intermediate shaft (37) extends transversely, preferably substantially orthogonally, to the direction of forward travel (13).

20. Cutting machine according to Claim 19, ***characterized in*** that the intermediate shaft (37) extends substantially horizontally.

21. Cutting machine according to Claim 20, ***characterized in*** that the intermediate shaft (37) extends substantially parallel to the primary output shaft (28).

22. Cutting machine according to any one of Claims 1 to 21, ***characterized in*** that the primary transmission device (23) contains transmission elements (36) comprising a set of cylindrical gears (44).

23. Cutting machine according to any one of Claims 1 to 22, ***characterized in*** that there is a drive mechanism (70) intended, on the one hand, to allow the motion of the primary input shaft (27) to be transmitted to the cutting mechanism (10) and, on the other hand, to prevent the motion of the said cutting mechanism (10) from being transmitted to the said primary input shaft (27).

24. Cutting machine according to Claim 23, ***characterized in*** that the drive mechanism (70) is fitted between the second universal joint (60) and the secondary input shaft (57).

25. Cutting machine according to any one of Claims 1 to 24, ***characterized in*** that the primary transmission device (23) is substantially located at the side (33) of the frame (2) farthest from the cutting mechanism (10).

26. Cutting machine according to any one of Claims 1 to 25, ***characterized in*** that the primary transmission device (23) comprises a gearbox (34) connected to the frame (2) by means of elastic rings (35).
